# EUROPEAN PATENT APPLICATION

(11) **EP 4 260 947 A1**
(43) Date of publication of application: **18.10.2023**
(21) Application number: 22712489.8
(22) Date of filing: 24.02.2022
(51) Int. Cl.: B05C 5/02, H01M 4/04

(54) **COATING DIE AND COATING DEVICE**

(71) Applicant: SHENZHEN MANST TECHNOLOGY CO., LTD., Shenzhen, Guangdong 518118 (CN)
(72) Inventor: The designation of the inventor has not yet been filed
(74) Representative: J A Kemp LLP
(86) International application number: PCT/CN2022/077753
(87) International publication number: WO 2023/159436

(57) **Abstract**

Disclosed are a coating die and coating equipment. The coating die comprises an upper die, a lower die and a first adjusting mechanism. The upper die and the lower die jointly form a coating slot for slurry circulation; the first adjusting mechanism comprises a driving piece, a first adjusting piece and a direction-conversion assembly; the driving piece is arranged in a first direction on the upper die and/or the lower die; the first adjusting piece is arranged in a second direction on the upper die and/or the lower die, is connected with the driving piece, and has a first state of extending into the coating slot under the action of the driving piece; the direction-conversion assembly is arranged between the driving piece and the first adjusting piece and configured to convert the direction of the action force of the driving piece acting on the first adjusting piece. By arranging the direction-conversion assembly, the first adjusting mechanism can be installed according to use requirements, the height of the whole machine is prevented from being increased, the space occupied by the first adjusting mechanism in the height direction of the whole machine is reduced, thus facilitating packaging and transferring and avoiding damage caused by collision.

## Description

### TECHNICAL FIELD

The present application relates to the technical field of coating equipment, in particular to a coating die and coating equipment.

### BACKGROUD

Slot extrusion coating is a precise wet coating technology, and the working principle thereof is that slurry is extruded and ejected along the gap of the coating die under a certain pressure and a certain flow rate and transferred to the substrate. Compared with other coating manners, slot extrusion coating has the advantages of being high in coating speed, high in precision and uniform in wet thickness.

An existing flow adjusting mechanism is fixed to an upper die and occupies a larger vertical space, for whole equipment assembled with the flow adjusting mechanism, a larger packaging box is needed in the transportation process, and the protruding adjusting device is prone to collision, if the collision is slight, the adjusting sensitivity is affected, and if the collision is serious, the adjusting device will be scrapped.

### SUMMARY

Therefore, the present application aims to solve the technical problems that the coating device in the prior art occupies a larger space in the height direction of the whole machine, which leads to the problem that the coating device is prone to collision in the transportation process and is inconvenient to package and transfer.

Therefore, the present application provides a coating die, comprising:
an upper die and a lower die that are oppositely arranged, wherein the upper die and the lower die jointly form a coating slot for slurry circulation; and
a first adjusting mechanism, wherein the first adjusting mechanism comprises:
   a driving piece, arranged in a first direction on the upper die and/or the lower die;
   a first adjusting piece, arranged in a second direction on the upper die and/or the lower die,
   wherein an intersection angle is formed between the first direction and the second direction, the first adjusting piece is connected to the driving piece, and the first adjusting piece has a first state of extending into the coating slot under the action of the driving piece; and
   a direction-conversion assembly, arranged between the driving piece and the first adjusting piece, wherein the direction-conversion assembly is configured to convert the direction of the action force of the driving piece acting on the first adjusting piece.

Optionally, in the coating die,
the upper die and/or the lower die comprises a first deformation part and a first base part;
the coating die further comprises a second adjusting mechanism, wherein the second adjusting mechanism comprises a push-pull piece, the push-pull piece is connected with the first deformation part, the push-pull piece has a second state of driving the first deformation part to move towards or away from the first base part under the driving of an external force, and in the second state, a lower lip of the lower die is warped relative to an upper lip of the upper die.

Optionally, in the coating die,
the upper die and/or the lower die comprises a second deformation part and a second base part;
the coating die further comprises a third adjusting mechanism, wherein the third adjusting mechanism comprises a second adjusting piece and a third adjusting piece, the second adjusting piece is fixedly connected with the second deformation part, a first threaded part of the second adjusting piece is screwed to a second threaded part of the third adjusting piece, and a third threaded part of the third adjusting piece is screwed to a fourth threaded part of the second base part;
the third adjusting piece has a third state of driving the second deformation part to move towards or away from the second base part under the action of an external force, and in the third state, an upper lip of the upper die is warped relative to a lower lip of the lower die.

Optionally, in the coating die,
the upper die is further provided with a fourth adjusting mechanism, wherein the fourth adjusting mechanism comprises a power transmission piece and a fourth adjusting piece, and an output end of the power transmission piece is connected with the fourth adjusting piece;
the fourth adjusting piece has a fourth state of being driven by the power transmission piece to move back and forth in the coating slot.

Optionally, in the coating die,
the first adjusting mechanism further comprises a driving board, and the driving board is in communication connection with the driving piece.

Optionally, in the coating die,
the upper die and/or the lower die is provided with a plurality of accommodating grooves, and
the first adjusting mechanism is fixed in the accommodating groove.

Optionally, in the coating die,
the direction-conversion assembly is a cam assembly, and the cam assembly comprises:
a cam seat;
a sliding piece, slidably arranged in the second direction on the cam seat, and connected with the first adjusting piece; and
a cam body, rotatably arranged in the sliding piece and fixedly connected with an output shaft of the driving piece.

Optionally, in the coating die,
the cam seat is provided with a sliding groove, and the sliding piece is slidably connected with the cam seat through the sliding groove;
   or
the cam seat is provided with a crossed-roller guide rail, and the sliding piece is slidably connected with the cam seat through the crossed-roller guide rail.

Optionally, in the coating die,
the direction-conversion assembly further comprises a displacement measuring piece, and the displacement measuring piece is arranged on the cam seat so as to detect the amount of displacement of the sliding piece relative to the cam seat.

Optionally, in the coating die,
the displacement measuring piece comprises a grating ruler and a grating ruler reading head, wherein the grating ruler is arranged between the sliding piece and the cam seat, and the grating ruler reading head is arranged on the grating ruler and is in communication connection with the driving board;
   or
the displacement measuring piece is a displacement sensor, and the displacement sensor is arranged on the cam seat and is in communication connection with a driving board.

Optionally, in the coating die,
the driving piece is a linear driving piece; the direction-conversion assembly is a first wedge-shaped follower assembly, and the first wedge-shaped follower assembly comprises:
a wedge-shaped block, wherein one end of the wedge-shaped block is connected with an output shaft of the linear driving piece;
a follower wheel, wherein the follower wheel abuts against an inclined surface of the wedge-shaped block;
a self-restoring elastic shaft, wherein a first end of the self-restoring elastic shaft is connected with and fixed to the follower wheel, and a second end of the self-restoring elastic shaft is connected with the first adjusting piece;
   or
the direction-conversion assembly is a second wedge-shaped follower assembly, and the second wedge-shaped follower assembly comprises:
   a screw rod, connected with an output shaft of the driving piece;
   a nut seat, arranged on the screw rod;
   a first wedge-shaped block, fixed to the nut seat;
   a second wedge-shaped block, configured to match the first wedge-shaped block, and connected with the first adjusting piece;
   an elastic piece, configured to tighten the first wedge-shaped block towards the second wedge-shaped block; and
   a first sliding rail and a second sliding rail, wherein the nut seat is arranged on the first sliding rail, and the first sliding rail extends in the first direction; the second wedge-shaped block is arranged on the second sliding rail, and the second sliding rail extends in the second direction. Optionally, in the coating die,
   a slot-forming face for forming the coating slot is made of a ceramic material.

Optionally, in the coating die,
both the upper die and the lower die are of an integrated structure made of a ceramic material; or
at least one of the upper die and the lower die comprises a ceramic component and a supporting shell, the ceramic component is fixedly connected with the supporting shell, and a side, away from the supporting shell, of the ceramic component is a slot-forming face.

Optionally, in the coating die,
the coating die further comprises at least one middle die, and the middle die is arranged between the upper die and the lower die.

Optionally, in the coating die,
the middle die is made of a ceramic material.

The present application also provides coating equipment, comprising the coating die mentioned above.

The technical solution provided by the present application has the following advantages:
according to the coating die provided by the present application, due to the arrangement of the direction-conversion assembly, the output of the driving piece in the first direction is converted into the movement in the second direction, so that the first adjusting mechanism can be mounted according to use requirements, the height of the whole machine is prevented from being increased, and the space occupied by the first adjusting mechanism in the height direction of the whole machine is reduced, which facilitates packaging and transferring, and can also avoid damage caused by collision.

### BRIEF DESCRIPTION OF THE DRAWINGS

In order to more clearly illustrate the specific implementations of the present application or the technical solutions in the prior art, the accompanying drawings required in the description of the specific implementations or the prior art will be briefly introduced below. Obviously, the drawings that will be described below are some implementations of the present application. For those of ordinary skill in the art, other drawings can also be obtained from these drawings without creative work.
Fig. 1 is a structural schematic diagram of a coating die provided by embodiments of the present application;
Fig. 2 is a front view of Fig. 1;
Fig. 3 is a sectional view of Fig. 2 in the A-A direction;
Fig. 4 is a structural schematic diagram of a first adjusting mechanism in a coating die provided by embodiments of the present application;

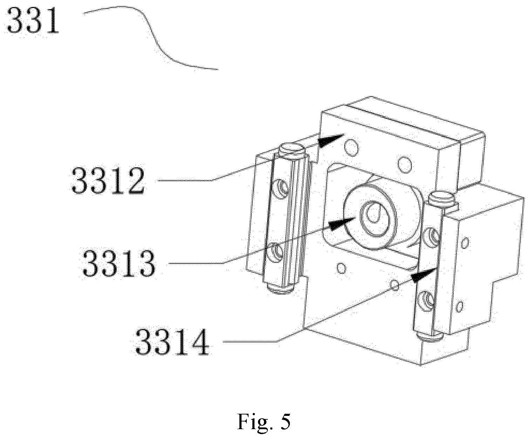

Fig. 5 is a structural schematic diagram of a cam assembly in a coating die provided by embodiments of the present application;
Fig. 6 is a structural schematic diagram of another coating die provided by embodiments of the present application;
Fig. 7 is a front view of Fig. 6;
Fig. 8 is a sectional view of Fig. 7 in the B-B direction;
Fig. 9 is another structural schematic diagram of a first adjusting mechanism in a coating die provided by embodiments of the present application;
Fig. 10 is a top view of Fig. 9;
Fig. 11 is a sectional view of Fig. 10 in the C-C direction;
Fig. 12 is a structural schematic diagram of a coating die provided by embodiments of the present application, in which a ceramic component and a supporting shell are connected in a mutually piece-assembled manner;
description of reference signs:
1-upper die; 11-first ceramic component; 12-first supporting shell;
2-lower die; 21-second ceramic component; 22-second supporting shell;
3-first adjusting mechanism;
31-driving piece; 32-output shaft; 32-first adjusting piece; 321-rod body; 322-intercepting block;
33-direction-conversion assembly; 331-cam assembly; 3311-cam seat; 3312-sliding piece; 3313-cam body; 3314-crossed-roller guide rail; 3315-bearing; 3316-grating ruler; 3317-grating ruler reading head; 3318-displacement measuring piece;
332-second wedge-shaped follower assembly;
3321-screw rod; 3322-nut seat; 3323-first wedge-shaped block; 3324-second wedge-shaped block; 3325-elastic piece; 3326-first sliding rail; 3327-second sliding rail;
34-driving board;
35-mounting shell;
4-middle die.

### DETAILED DESCRIPTION

The technical solutions of the present application will be clearly and completely described below with reference to the accompanying drawings. Obviously, the described embodiments are part of the embodiments of the present application, but not all of the embodiments. Based on the embodiments in the present application, all other embodiments obtained by those of ordinary skill in the art without creative work fall within the protection scope of the present application. In the description of the present application, it should be noted that the terms "centre", "upper", "lower", "left", "right", "vertical", "horizontal", "inner", "outer", etc. for indicating orientation or positional relationship are based on the orientation or positional relationship shown in the accompanying drawings, which is only for the convenience of describing the present application and simplifying the description, rather than indicating or implying that the device or element referred to must have a specific orientation or be constructed or operated at a specific orientation, and therefore should not be construed as limitations on the present application. Furthermore, the terms "first", "second" and "third" are used for descriptive purposes only and should not be construed to indicate or imply relative importance.

In the description of the present application, it should be noted that, unless otherwise expressly specified and limited, the terms "installed", "connected" and "connection" should be understood in a broad sense, for example, connection can be fixed connection, or detachable connection, or integrated connection, can be mechanical connection, and can also be electrical connection, and can be direct connection, can also be indirect connection through an intermediate medium, and can be internal communication between two elements. For those of ordinary skill in the art, the specific meanings of the above terms in the present application can be understood in specific situations.

In addition, the technical features involved in the different implementations of the present application described below can be combined with each other as long as they do not conflict with each other.

### Embodiment 1

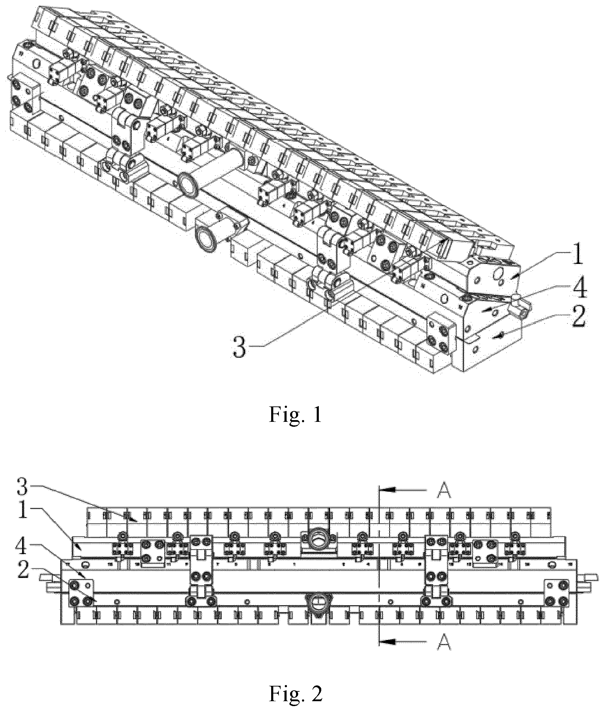

This embodiment provides a coating die, as shown in Fig. 1 and Fig. 2, the coating die comprises an upper die 1 and a lower die 2 that are oppositely arranged, and first adjusting mechanisms 3. Wherein, the upper die 1 and the lower die 2 jointly form a coating slot for slurry circulation; the first adjusting mechanism 3 comprises a driving piece 31, a first adjusting piece 32 and a direction-conversion assembly 33; the driving piece 31 is arranged in a first direction on the upper die 1 and the lower die 2; the first adjusting piece 32 is arranged in a second direction on the upper die 1 and the lower die 2, an intersection angle is formed between the first direction and the second direction, the first adjusting piece 32 is connected to the driving piece 31, and the first adjusting piece 32 has a first state of extending into the coating slot under the action of the driving piece 31; the direction-conversion assembly 33 is arranged between the driving piece 31 and the first adjusting piece 32, and the direction-conversion assembly 33 is configured to convert the direction of the action force of the driving piece 31 acting on the first adjusting piece 32.

According to the coating die provided by this embodiment, due to the arrangement of the direction-conversion assembly 33, the output of the driving piece 31 in the first direction is converted into movement in the second direction, so that the first adjusting mechanisms 3 can be mounted according to use requirements, the height of the whole machine is prevented from being increased, and the space occupied by the first adjusting mechanisms 3 in the height direction of the whole machine is reduced, which facilitates packaging and transferring, and can also avoid damage caused by collision.

In this embodiment, as shown in Fig. 1, Fig. 2 and Fig. 3, in order to fix the first adjusting mechanisms 3 to the upper die 1 and the lower die 2, only fixing holes need to be formed in the die to fix the first adjusting mechanisms 3 without changing the size of an existing coating die. The fixing manner of the first adjusting mechanisms 3 provided by the embodiment has little change on the coating die, so that the die does not need to be greatly cut, and a cover can be arranged outside the coating die for covering all the first adjusting mechanisms 3, and the cover plays a role in protecting the whole machine and preventing dust.

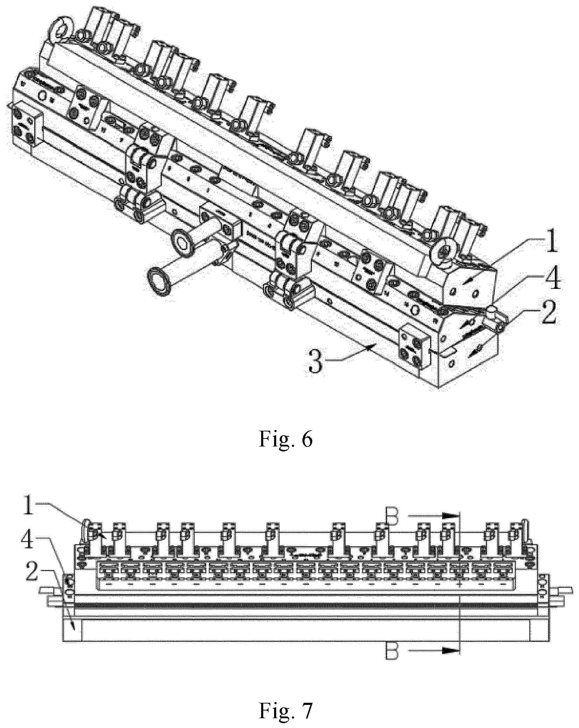

In other optional implementations, as shown in Fig. 6, Fig. 7 and Fig. 8, the upper die 1 and the lower die 2 are provided with accommodating grooves, a plurality of first adjusting mechanisms 3 are fixed in the accommodating grooves, and a cover is arranged at openings of the accommodating grooves for covering all the automatic flow adjusting devices. Specifically, a convex beam is arranged in the length direction of the die, and is provided with a through hole allowing an output shaft 311 of the driving piece 31 to pass through, a motor is fixed to one side of the convex beam, and the direction-conversion assembly 33 is fixed to the other side of the convex beam, so that the automatic flow adjusting devices can be fixed to the die in an embedded manner, the space of the die is saved, fixing is convenient, and the automatic flow adjusting devices are also protected by the cover.

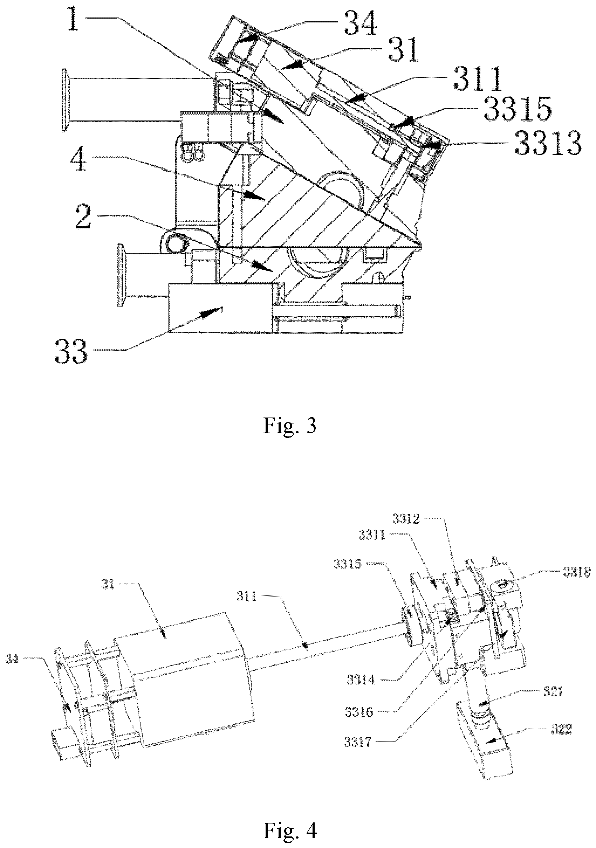

Specifically, in this embodiment, as shown in Fig. 4, the first adjusting mechanism 3 further comprises a driving board 34, and the driving board 34 is in communication connection with the driving piece 31 so as to electrically control the driving piece 31.

In this embodiment, as shown in Fig. 4, the direction-conversion assembly 33 is a cam assembly 331, and the cam assembly 331 comprises a cam seat 3311, a sliding piece 3312 and a cam body 3313. Wherein, the sliding piece 3312 is slidably arranged on the cam seat 3311, and the sliding piece 3312 is connected with the first adjusting piece 32; the cam body 3313 is rotatably embedded in the sliding piece 3312, and the cam body 3313 is fixed to the output end of the driving piece 31. Specifically, a motor is selected as the driving piece 31, and an output shaft 311 is arranged at the output end of the motor, when the output shaft 311 of the motor rotates, the cam body 3313 can be driven to rotate, and when the cam body 3313 rotates, the sliding piece 3312 is further driven to reciprocate in the cam seat 3311. Therefore, the sliding piece 3312 can reciprocate on the cam seat 3311, and the sliding piece 3312 drives the adjusting piece to move in the height direction of the coating die so as to adjust the surface density of coating. The movement smoothness of the adjusting piece is improved, and the coating uniformity is improved.

In this embodiment, the cam seat 3311 is provided with a crossed-roller guide rail 3314, and the sliding piece 3312 is slidably connected with the cam seat 3311 through the crossed-roller guide rail 3314. The crossed-roller guide rail 3314 is adopted, so that the sliding piece 3312 can slide more smoothly.

In other optional implementations, the cam seat 3311 can be provided with a sliding groove, and the sliding piece 3312 is slidably connected with the cam seat 3311 through the sliding groove.

In this embodiment, the first adjusting piece 32 can be of a block-shaped structure with a T-shaped section, specifically, the first adjusting piece 32 comprises a rod body 321 and an intercepting block 322, one end of the rod body 321 is connected with the cam seat 3311, the other end of the rod body 321 is fixedly connected with the intercepting block 322, and in this embodiment, the intercepting block 322 and the rod body 321 are integrally formed.

Specifically, in this embodiment, as shown in Fig. 4, the direction-conversion assembly 33 further comprises a displacement measuring piece 3318, and the displacement measuring piece 3318 is arranged on the cam seat 3311 so as to detect the amount of displacement of the sliding piece 3312 relative to the cam seat 3311. Specifically, as shown in Fig. 4, the displacement measuring piece 3318 is a displacement sensor, and the displacement sensor is arranged on the cam seat 3311 and is in communication connection with the driving board 34. For example, the displacement sensor can adopt an LVDT displacement sensor. Certainly, in other optional implementations, other position detectors can also be selected as long as the displacement of the sliding piece 3312 relative to the cam seat 3311 can be detected.

In other alternative implementations, the displacement measuring piece 3318 comprises a grating ruler 3316 and a grating ruler 3316 reading head, wherein the grating ruler 3316 is arranged between the sliding piece 3312 and the cam seat 3311, and the grating ruler 3316 reading head is arranged on the grating ruler 3316 and is in communication connection with the driving board 34.

In this embodiment, as shown in Fig. 4, the direction-conversion assembly 33 further comprises a mounting shell 35, the cam assembly 331 is installed in the mounting shell 35, a bearing 3315 is further embedded in the mounting shell 35, the output shaft 311 of the motor penetrates through the bearing 3315 and is connected with the cam body 3313, and eccentric rotation of the far end of the output shaft 311 of the motor is further limited by additionally arranging the bearing 3315.

As a first alternative implementation of the direction-conversion assembly 33, the driving piece 31 is a linear driver; the direction-conversion assembly 33 is a first wedge-shaped follower assembly, and the first wedge-shaped follower assembly comprises a wedge-shaped block, a follower wheel and a self-restoring elastic shaft. One end of the wedge-shaped block is connected with an output shaft 311 of the linear driving piece 31; the follower wheel abuts against the inclined surface of the wedge-shaped block; the first end of the self-restoring elastic shaft is fixedly connected with the follower wheel, and the second end of the self-restoring elastic shaft is connected with the first adjusting piece 32;

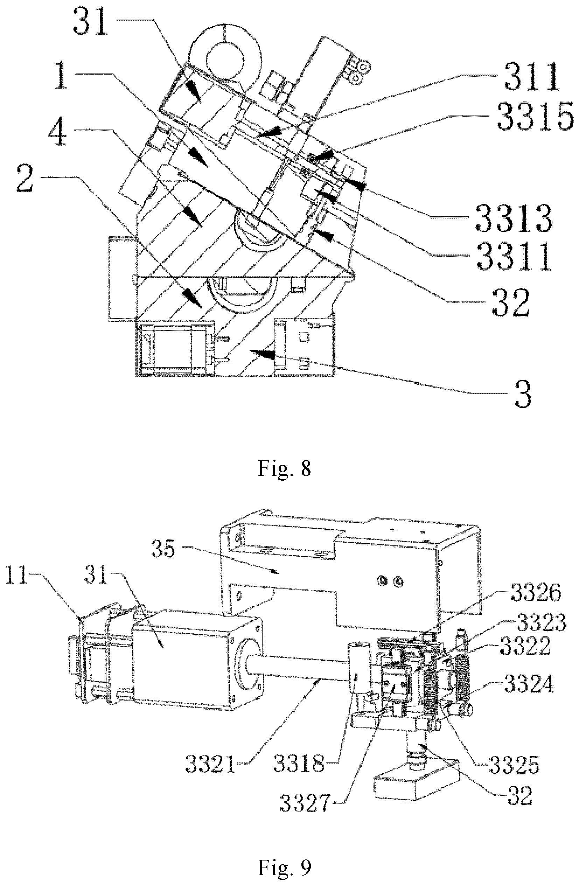

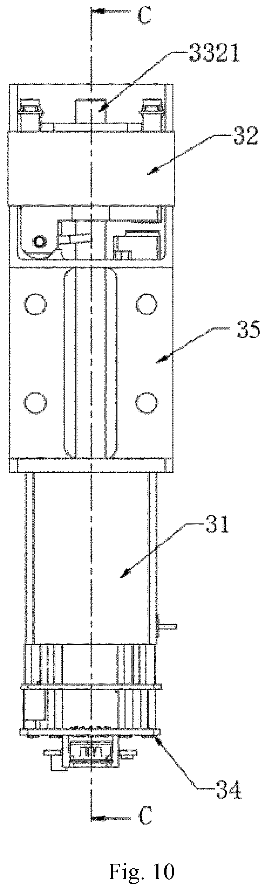

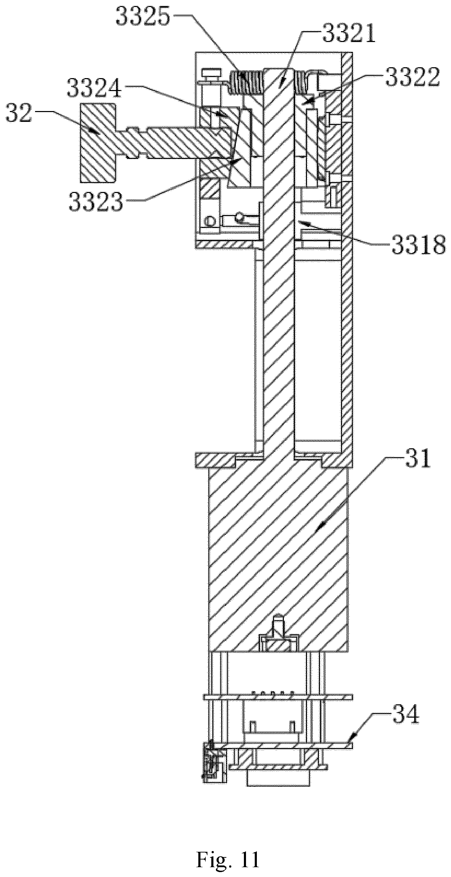

as a second alternative implementation of the direction-conversion assembly 33, as shown in Fig. 9, Fig. 10 and Fig. 11, the direction-conversion assembly 33 is a second wedge-shaped follower assembly 332, and the second wedge-shaped follower assembly 332 comprises a screw rod 3321, a nut seat 3322, a first wedge-shaped block 3323, a second wedge-shaped block 3324, an elastic piece 3325, a first sliding rail 3326 and a second sliding rail 3327. The screw rod 3321 is connected with an output shaft 311 of the driving piece 31; the nut seat 3322 is arranged on the screw rod 3321; the first wedge-shaped block 3323 is fixed to the nut seat 3322; the second wedge-shaped block 3324 is configured to match the first wedge-shaped block 3323, and the second wedge-shaped block 3324 is connected with the first adjusting piece 32; the elastic piece 3325 is configured to tighten the first wedge-shaped block 3323 towards the second wedge-shaped block 3324; the nut seat 3322 is arranged on the first sliding rail 3326, and the first sliding rail 3326 extends in the first direction; the second wedge-shaped block 3324 is arranged on the second sliding rail 3327, and the second sliding rail 3327 extends in the second direction.

### Embodiment 2

This embodiment provides a coating die, which is different from the coating die provided in embodiment 1 in that:
in the coating die in this embodiment, only an upper die 1 is provided with a first adjusting mechanism 3, and a lower die 2 comprises a first deformation part and a first base part;
the lower die 2 is provided with a second adjusting mechanism, the second adjusting mechanism comprises a push-pull piece, the push-pull piece is connected with the first deformation part, the push-pull piece has a second state of driving the first deformation part to move towards or away from the first base part under the driving of an external force, and in the second state, a lower lip of the lower die 2 is warped relative to an upper lip of the upper die 1.

In the second state, the push-pull action of the push-pull piece can realize the deformation of the lip of the lower die 2 of the coating die, so that the gap at the outlet of the protrusion slot is adjusted, the local thickness of the coating is changed, and the uniformity of the coating is further adjusted. By adopting the double-adjustment manner of the upper die 1 and the lower die 2 in this embodiment, the coating thickness is adjusted on the basis of not additionally increasing the height of the whole machine, so that the applicability of the coating die is further improved.

### Embodiment 3

This embodiment provides a coating die, which is different from the coating die provided in embodiment 1 or the coating die provided in embodiment 2 in that,
in this embodiment, a first adjusting mechanism 3 is arranged on a lower die 2, an upper die 1 is provided with a third adjusting mechanism, the third adjusting mechanism comprises a second adjusting piece and a third adjusting piece, the second adjusting piece is fixedly connected with the second deformation part, and a first threaded part of the second adjusting piece is screwed to a second threaded part of the third adjusting piece, a third threaded part of the third adjusting piece is screwed to a fourth threaded part of the second base part; the third adjusting piece has a third state of driving the second deformation part to move towards or away from the second base part under the action of an external force, and in the third state, an upper lip of the upper die 1 is warped relative to a lower lip of the lower die 2.

Specifically, the second adjusting piece and the third adjusting piece are both bolts, and correspondingly, the threaded parts are both threaded surfaces.

In this embodiment, when the third adjusting piece rotates, the third adjusting piece drives the second adjusting piece to move towards or away from the second base part, and then for the upper die 1, the second deformation part moving towards or away from the second base part under the driving of the second adjusting piece is equivalent to realizing warping of the lip of the upper die 1.

### Embodiment 4

This embodiment provides a coating die, which is different from the coating die provided in any one of embodiments 1 to 3 in that,
a lower die 2 is provided with a first adjusting mechanism 3, an upper die 1 is provided with a fourth adjusting mechanism, the fourth adjusting mechanism comprises a power transmission piece and a fourth adjusting piece, and the output end of the power transmission piece is connected with the fourth adjusting piece; the fourth adjusting piece has a fourth state of being driven by the power transmission piece to move back and forth in the coating slot.

In this embodiment, the power transmission piece is a micrometer head, the output end of the micrometer head is connected with the fourth adjusting piece through a coupling, the structure of the fourth adjusting piece in this embodiment is similar to that of the first adjusting piece 32 in embodiment 1, and is of a block structure with a T-shaped section.

According to the coating die provided by this embodiment, by manually rotating the micrometer head, the fourth adjusting piece can extend into the coating slot, so that the fourth adjusting piece adjusts the flow rate in the coating slot in an intercepting manner.

### Embodiment 5

This embodiment provides a coating die, which is different from the coating die provided in any one of embodiment 1 to embodiment 4 in that,
a slot-forming face for forming a coating slot is made of a ceramic material; both the upper die 1 and the lower die 2 are of an integrated structure made of a ceramic material; according to the coating die provided by the present application, the slot-forming face for forming the coating slot is made of the ceramic material, so that the wear resistance and corrosion resistance of the slot-forming surface for forming the coating slot are greatly improved in the coating process of slurry; and even if a small amount of ceramic material is worn and enters the slurry, the influence on the slurry is very small, so that the performance of the battery electrode piece will not be affected, and thus the yield of the finished battery electrode piece is effectively ensured. In addition, the upper die 1 and the lower die 2 are set to be of an integrated structure, so that the integration of the integrated structure is further improved, and the problem of material falling is avoided.

In this embodiment, the ceramic material is a metal ceramic material, and specifically, the metal ceramic material is one selected from oxide-based metal ceramic, carbide-based metal ceramic, nitride-based metal ceramic, boride-based metal ceramic and silicide-based metal ceramic. When the oxide-based metal ceramic is selected, the oxide-based metallic ceramic is formed by taking aluminum oxide, zirconium oxide, magnesium oxide, beryllium oxide or the like as a matrix which is compounded with metal tungsten, chromium or cobalt, so that the oxide-based metallic ceramic has the characteristics of high temperature resistance, chemical corrosion resistance, good thermal conductivity, high mechanical strength and the like.

When the carbide-based metal ceramic is selected, the carbide-based metallic ceramic is formed by taking titanium carbide, silicon carbide, tungsten carbide or the like as a matrix which is compounded with metals such as metal cobalt, nickel, chromium, tungsten and molybdenum, so that the carbide-based metallic ceramic has the characteristics of high hardness, high wear resistance, high temperature resistance and the like.

When nitride-based metal ceramic is selected, titanium nitride, boron nitride, silicon nitride or tantalum nitride is used as a matrix, and the nitride-based metallic ceramic has super-hardness, thermal shock resistance and good high-temperature creep property.

When the boride-based metal ceramic is selected, the boride-based metallic ceramic is formed by taking titanium boride, tantalum boride, vanadium boride, chromium boride, zirconium boride, tungsten boride, molybdenum boride, niobium boride, hafnium boride or the like as a matrix which is compounded with part of metal materials.

When the silicide-based metal ceramic is selected, the silicide-based metallic ceramic is formed by taking manganese silicide, iron silicide, cobalt silicide, nickel silicide, titanium silicide, zirconium silicide, niobium silicide, vanadium silicide, niobium silicide, tantalum silicide, molybdenum silicide, tungsten silicide, barium silicide or the like as a matrix which is compounded with part of or trace of metal materials. Certainly, selecting what kind of ceramic material to manufacture the coating die only depends on specific conditions.

Certainly, in an optional implementation, a non-metallic ceramic material can also be selected, and the non-metallic material is silicon oxide or silicon carbide.

### Embodiment 6

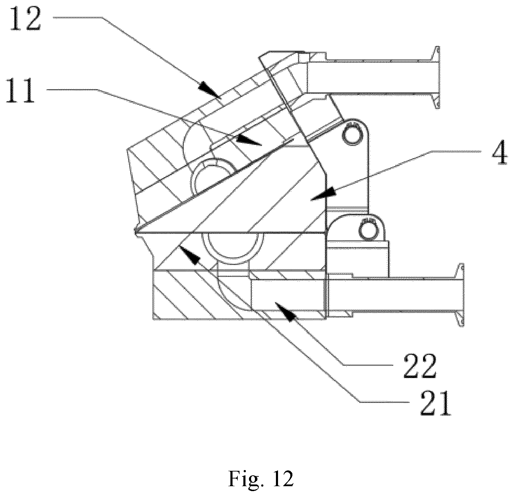

This embodiment provides a coating die, which is different from the coating die provided in embodiment 5 in that,
as shown in Fig. 12, the material selection of the upper die 1 and the lower die 2 changes, at least one of the upper die 1 and the lower die 2 in this embodiment comprises a ceramic component and a supporting shell, the ceramic component is fixedly connected with the supporting shell, and the side, away from the supporting shell, of the ceramic component is a slot-forming face.

Specifically, the upper die 1 is provided with a first supporting shell 12 and a first ceramic component 11, the first supporting shell 12 is provided with a first supporting groove, and the first ceramic component 11 is installed in the first supporting groove. Specifically, the section of the first supporting shell 12 is in an L shape, and the first ceramic component 11 is fixedly installed in the L-shaped first supporting groove.

The lower die 2 is provided with a second supporting shell 22 and a second ceramic component 21, the second supporting shell 22 is provided with a second supporting groove, and the second ceramic component 21 is installed in the second supporting groove. For example, the second supporting groove is an open groove, and the second ceramic component 21 is clamped in the open groove.

Certainly, the shape of the supporting groove can be selected according to specific conditions, such as a V shape or other irregular shapes, the selection basis can be adjusted according to use purposes and installation convenience, and it needs to be guaranteed that connection between the supporting shell and the ceramic component is reliable.

As other alternative implementations of this embodiment, the upper die 1 can be formed from a ceramic material alone, and the lower die 2 is formed by piece-assembling a metal material and a ceramic material; similarly, the lower die 2 can be formed from a ceramic material alone, and the upper die 1 is formed by piece-assembling a metal material and a ceramic material; by means of the two optional implementations, it can also be guaranteed that the slot-forming face for forming the coating slot is made of a ceramic material.

As a variant implementation of this embodiment, the supporting shell and the ceramic component are both of a flat plate structure, and the plate face of the ceramic component is connected with the plate face of the supporting shell. Due to the adoption of the setting manner of the flat plate structure, direct piece-assembling of the supporting shell and the ceramic component is realized, and the cutting amount of the die is reduced. Specifically, in this embodiment, the supporting shell is a metal plate, and the metal plate can be manufactured by integral forming.

### Embodiment 7

This embodiment provides a coating die, which is different from the coating die provided by any one of embodiment 1 to embodiment 6 in that,
as shown in Fig. 1, the coating die provided by this embodiment also comprises a middle die 4 which is arranged between the upper die 1 and the lower die 2. A first coating slot is formed between the middle die 4 and the upper die 1, and a second coating slot is formed between the middle die 4 and the lower die 2; the middle die 4 in this embodiment is made of a ceramic material. Through the arrangement of the middle die 4, the double-layer coating of the die is realized.

Specifically, according to the piece-assembling manner of the ceramic component and the supporting shell corresponding to this embodiment, the upper die 1 is provided with a first supporting shell 12 and a first ceramic component 11, the first supporting shell 12 is provided with a first supporting groove, and the first ceramic component 11 is installed in the first supporting groove. The lower die 2 is provided with a second supporting shell 22 and a second ceramic component 21, the second supporting shell 22 is provided with a second supporting groove, and the second ceramic component 21 is installed in the second supporting groove. For example, the second supporting groove is an open groove, and the second ceramic component 21 is clamped in the open groove.

The middle die 4 is made of a ceramic material, so that the wear resistance and corrosion resistance of the slot-forming face for forming each coating slot are greatly improved in the coating process of the die; even if a small amount of ceramic material is worn and enters the slurry, the influence on the slurry is very small, and the performance of the battery electrode piece will not be affected, so that the yield of the finished battery electrode piece is ensured.

### Embodiment 8

This embodiment provides coating equipment, comprising the coating die provided by any one of embodiment 1 to embodiment 7.

Obviously, the above embodiments are only examples for clear description, and are not intended to limit the implementations. For those of ordinary skill in the art, changes or modifications in other different forms can also be made on the basis of the above description. There is no need and cannot be exhaustive of all implementations here. However, the obvious changes or changes derived from this are still within the protection scope of the present application.

## Claims

1. A coating die, **characterized by** comprising:
an upper die and a lower die that are oppositely arranged, wherein the upper die and the lower die jointly form a coating slot for slurry circulation; and
a first adjusting mechanism, wherein the first adjusting mechanism comprises:
a driving piece, arranged in a first direction on the upper die and/or the lower die;
a first adjusting piece, arranged in a second direction on the upper die and/or the lower die, wherein an intersection angle is formed between the first direction and the second direction, the first adjusting piece is connected to the driving piece, and the first adjusting piece has a first state of extending into the coating slot under the action of the driving piece; and
a direction-conversion assembly, arranged between the driving piece and the first adjusting piece, wherein the direction-conversion assembly is configured to convert the direction of the action force of the driving piece acting on the first adjusting piece.

2. The coating die according to claim 1, **characterized in that**
the upper die and/or the lower die comprises a first deformation part and a first base part;
the coating die further comprises a second adjusting mechanism, wherein the second adjusting mechanism comprises a push-pull piece, the push-pull piece is connected with the first deformation part, the push-pull piece has a second state of driving the first deformation part to move towards or away from the first base part under the driving of an external force, and in the second state, a lower lip of the lower die is warped relative to an upper lip of the upper die.

3. The coating die according to claim 1, **characterized in that**
the upper die and/or the lower die comprises a second deformation part and a second base part;
the coating die further comprises a third adjusting mechanism, wherein the third adjusting mechanism comprises a second adjusting piece and a third adjusting piece, the second adjusting piece is fixedly connected with the second deformation part, a first threaded part of the second adjusting piece is screwed to a second threaded part of the third adjusting piece, and a third threaded part of the third adjusting piece is screwed to a fourth threaded part of the second base part;
the third adjusting piece has a third state of driving the second deformation part to move towards or away from the second base part under the action of an external force, and in the third state, an upper lip of the upper die is warped relative to a lower lip of the lower die.

4. The coating die according to claim 1, **characterized in that**
the upper die and/or the lower die is further provided with a fourth adjusting mechanism, wherein the fourth adjusting mechanism comprises a power transmission piece and a fourth adjusting piece, and an output end of the power transmission piece is connected with the fourth adjusting piece;
the fourth adjusting piece has a fourth state of being driven by the power transmission piece to move back and forth in the coating slot.

5. The coating die according to any one of claims 1-4, **characterized in that** the first adjusting mechanism further comprises a driving board, and the driving board is in communication connection with the driving piece.

6. The coating die according to any one of claims 1-4, **characterized in that** the direction-conversion assembly is a cam assembly, and the cam assembly comprises:
a cam seat;
a sliding piece, slidably arranged in the second direction on the cam seat, and connected with the first adjusting piece; and
a cam body, rotatably arranged in the sliding piece and fixedly connected with an output shaft of the driving piece.

7. The coating die according to claim 6, **characterized in that**
the cam seat is provided with a sliding groove, and the sliding piece is slidably connected with the cam seat through the sliding groove;
or
the cam seat is provided with a crossed-roller guide rail, and the sliding piece is slidably connected with the cam seat through the crossed-roller guide rail.

8. The coating die according to claim 6, **characterized in that** the direction-conversion assembly further comprises a displacement measuring piece, and the displacement measuring piece is arranged on the cam seat so as to detect the amount of displacement of the sliding piece relative to the cam seat.

9. The coating die according to claim 8, **characterized in that** the displacement measuring piece comprises a grating ruler and a grating ruler reading head, wherein the grating ruler is arranged between the sliding piece and the cam seat, and the grating ruler reading head is arranged on the grating ruler and is in communication connection with a driving board;
or
the displacement measuring piece is a displacement sensor, and the displacement sensor is arranged on the cam seat and is in communication connection with a driving board.

10. The coating die according to any one of claims 1-4, **characterized in that** the driving piece is a linear driving piece; the direction-conversion assembly is a first wedge-shaped follower assembly, and the first wedge-shaped follower assembly comprises:
a wedge-shaped block, wherein one end of the wedge-shaped block is connected with an output shaft of the linear driving piece;
a follower wheel, wherein the follower wheel abuts against an inclined surface of the wedge-shaped block;
a self-restoring elastic shaft, wherein a first end of the self-restoring elastic shaft is connected with and fixed to the follower wheel, and a second end of the self-restoring elastic shaft is connected with the first adjusting piece;
or
the direction-conversion assembly is a second wedge-shaped follower assembly, and the second wedge-shaped follower assembly comprises:
a screw rod, connected with an output shaft of the driving piece;
a nut seat, arranged on the screw rod;
a first wedge-shaped block, fixed to the nut seat;
a second wedge-shaped block, configured to match the first wedge-shaped block, and connected with the first adjusting piece;
an elastic piece, configured to tighten the first wedge-shaped block towards the second wedge-shaped block; and
a first sliding rail and a second sliding rail, wherein the nut seat is arranged on the first sliding rail, and the first sliding rail extends in the first direction; the second wedge-shaped block is arranged on the second sliding rail, and the second sliding rail extends in the second direction.

11. The coating die according to any one of claims 1-4, **characterized in that** the upper die and/or the lower die is provided with a plurality of accommodating grooves, and the first adjusting mechanism is fixed in the accommodating groove.

12. The coating die according to any one of claims 1-4, **characterized in that** a slot-forming face for forming the coating slot is made of a ceramic material.

13. The coating die according to any one of claims 1-4, **characterized in that** both the upper die and the lower die are of an integrated structure made of a ceramic material; or
at least one of the upper die and the lower die comprises a ceramic component and a supporting shell, the ceramic component is fixedly connected with the supporting shell, and a side, away from the supporting shell, of the ceramic component is a slot-forming face.

14. The coating die according to any one of claims 1-4, **characterized in that**
the coating die further comprises at least one middle die, and the middle die is arranged between the upper die and the lower die.

15. The coating die according to claim 14, **characterized in that** the middle die is made of a ceramic material.

16. Coating equipment, **characterized by** comprising the coating die according to any one of claims 1-15.
